# EUROPEAN PATENT SPECIFICATION

(11) **EP 4 170 113 B1**
(45) Date of publication and mention of the grant of the patent: **16.07.2025**
(21) Application number: 21825710.3
(22) Date of filing: 18.06.2021
(51) Int. Cl.: E04H 4/16, E04H 4/12, G05B 15/02

(54) **SWIMMING POOL PROVIDED WITH EQUIPMENT FOR THE AUTOMATIC, INTEGRATED MANAGEMENT**
SCHWIMMBAD MIT AUTOMATISCHER INTEGRIERTER SCHWIMMBADVERWALTUNG
PISCINE AVEC GESTION INTÉGRALE AUTOMATIQUE DE PISCINES

(30) Priority: 18.06.2020 ES 202031309 U; 02.02.2021 ES 202130084; 09.02.2021 ES 202130098
(43) Date of publication of application: 26.04.2023
(73) Proprietor: Garcés Beramendi, Rafael, 28034 Madrid (ES)
(72) Inventor: Garcés Beramendi, Rafael, 28034 Madrid (ES)
(74) Representative: Roeb Diaz-Alvarez, Maria
(86) International application number: PCT/ES2021/070453
(87) International publication number: WO 2021/255318

(56) References cited:
- WO-A1-00/42339
- WO-A1-2015/191336
- WO-A1-2015/191336
- WO-A1-2018/122857
- ES-A1- 2 650 794
- ES-U- 1 135 382
- US-A- 5 616 239
- US-A- 5 730 861
- US-A- 5 730 861
- US-B1- 10 329 784

## Description

### OBJECT OF THE INVENTION

The present application relates to a swimming pool provided with an equipment for automatic, integrated management, which allows the maintenance and cleaning of swimming pools to be automated.

The object of the invention is to provide an integrated water management system for a swimming pool that allows the automated management thereof, with the minimal and correct possible use of chemical elements for cleaning the same, in order to minimise the water used in cleaning operations, and maintaining the required health standards, and with storage of the information that allows, from the data provided by the different sensors, the prediction and efficient calculation in the use of water, the chemical elements and the required energy expenditure.

### BACKGROUND OF THE INVENTION

In order to clean swimming pools, a user is required to perform maintenance operations that involve the opening and closing of different valves to control the water flow through different conduits, such as the water inlet for filling the swimming pool, the suction of water through the side opening that allows floating debris to be removed, the suction of the pool cleaner, the water inlet through the sump, and a key that allows the position to be changed depending on the operation being carried out.

This implies having to be present at the key box to perform the different functions, controlling times and opening and closing keys.

This implies a waste of time, which can also lead to errors when maintaining the swimming pool.

Invention patent US2007/0106403 A1, which tries to overcome this problem, at least partially, is known and it describes the management of swimming pools by means of a software that allows chemical elements to be dispensed in order to maintain the pH of the water and therefore the healthy conditions thereof, as well as the water inlet or the control of some water indicators.

The patent also covers the automation of spas and the water flow from the ejectors.

However, this document does not provide for the management of the water inlet valves for the different channels such as skimmers, pool cleaners or sump, the management of the selector valve, nor the pressure control of the pool filter, essential to control the filtration capacity, the adequate and correct use of chemical products and, in short, an efficient management of the use of water.

The same situation occurs in the case of patent US005616239A, which simply contemplates a system for controlling the water flow to an inlet valve and to an outlet valve to maintain a certain water level, transmitting the data to an external central station and being able to program the process.

In short, only partial solutions to this technical problem exist in the market, solutions which attempt to improve the integrated management of a swimming pool, such as by using solenoid valves or electronic valves, as the systems described in patents US5730861, WO 2015191336 and WO 0042339, but not allowing an integrated management of the swimming pool to be carried out, relating all the elements to be controlled and that are involved therein.

### DESCRIPTION OF THE INVENTION

The swimming pool provided with equipment for automatic, integrated management of the invention solves the aforementioned problem in a fully satisfactory manner, being applicable for use both in chlorine swimming pools and salt chlorination swimming pools.

For this purpose, the equipment of the invention consists of a remote switchboard through which it is possible to control all the valves that manage the water flow, by means of the information received through sensors that report on the status of the same, the level of filling of the pool, so as to allow decisions to be made for an optimal management in the maintenance thereof with the smallest use of chemical elements, the lowest water expenditure and the lowest electrical expenditure depending on the hourly operational availability.

More specifically, the invention is based on the conventional structure of a swimming pool, in which three circuits for suctioning swimming pool water and a circuit for returning clean water or filling of the pool are established, said circuits for suctioning swimming pool water being embodied in a circuit for collecting surface water by means of sumps or skimmers, a circuit for intaking water from the bottom of the pool, as well as a suction circuit to which a pool cleaner can be connected, with the particularity that said three circuits are connected to the corresponding water propulsion pump through three solenoid valves controlled by means of a switchboard, a sensor being associated with each circuit that detects the water flow through each circuit.

Moreover, and in accordance with another feature of the invention, the pump outlet is connected to a motorised selector valve which is also controlled by the switchboard, and which allows directing the flow propelled by the pump to the corresponding filter, either to the inlet or the outlet thereof (reversing the water flow through the same for cleaning thereof), to a drain, taking water from the mains, directing the flow to the water propulsion or supply circuit of the swimming pool, flow which is likewise controlled by means of another solenoid valve.

This selector valve is conventionally manual, since rotating its knob is not enough to actuate it, but rather a downward movement must be performed to detach it from its seat, prior to said rotation. For this reason it has been provided that the distribution valve includes a knob that can be attached to its selector which includes a motorised transmission from which an axial-vertical movement is applied to said knob, as well as a controlled rotation of the same.

This motorised transmission is associated with a wireless communication equipment that is also communicated with the switchboard.

It is worth mentioning the fact that this structure makes it possible to use most of the parts of the existing selector valves, so that only the actuation knob of the same must be modified, thus providing a universal model, which can be used in installations with conventional valves in a simple manner.

At the same time, it has been provided that the filter includes a pressure sensor that is connected to the switchboard, which allows the saturation level of the filter to be established, in order to generate alerts of the need to clean the filter, all of which can be carried out in a fully automated way as we will see below.

Finally, the system additionally includes swimming pool status sensors, such as pH, water temperature or turbidity sensors, the readings of which are sent to the switchboard, as well as dosing devices for chemical products, such as chlorine or algaecides, that are connected to the switchboard.

In the same way, the switchboard is able to control other systems associated with the swimming pool, such as the lighting thereof.

Thus, from this structure, the switchboard has a communication equipment, external or internal, for transmitting information and receiving it from an external server so that by means of a computer application accessible through a tablet, mobile phone or computer, the data obtained by the sensors can be analysed and an intelligent management, the use of chemical elements, the lowest water expenditure and the lowest electricity expenditure can be proposed depending on the hourly operational availability, management that can be fully automated and remotely carried out.

In fact, the application will allow not only a single pool to be managed, but as many pools as deemed convenient in which the system of the invention is installed.

More specifically, by means of the computer application, the user will be able to control the water inlet into the swimming pool for filling thereof and to cut off the mains water propulsion once the swimming pool is full.

Similarly, the computer application allows viewing the filter status through the pressure in the same, so that when the pressure is excessive this is interpreted as the filter having to be cleaned, a process that can likewise be ordered from the application, by changing the water flow commanded by the selector valve, also controlled remotely.

Likewise, the application allows checking the chlorine level (pH) in real time, and automatically applying chemical products until the monitored levels are adequate.

In addition, the application will allow the user to choose between the six operating modes allowed by the selector valve, which are only possible if the other solenoid valves are controlled simultaneously, the status of which will be also monitored.

At the same time, the application can be used to remotely control the cleaning modes allowed by the swimming pool, i.e., selecting the water flow through one of the three suction circuits, in order to, for example, remove leaves or floating debris from the water through the first circuit, remove debris from the bottom of the swimming pool through the second circuit, or connect a pool cleaner through the third circuit.

These operating modes can be programmed according to the specific requirements of each case or hours of lower cost for electricity consumption, or they can be managed remotely in real time.

Likewise, the computer application will allow the lighting of the swimming pool to be managed or programmed in the event that the swimming pool has such means.

### DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:

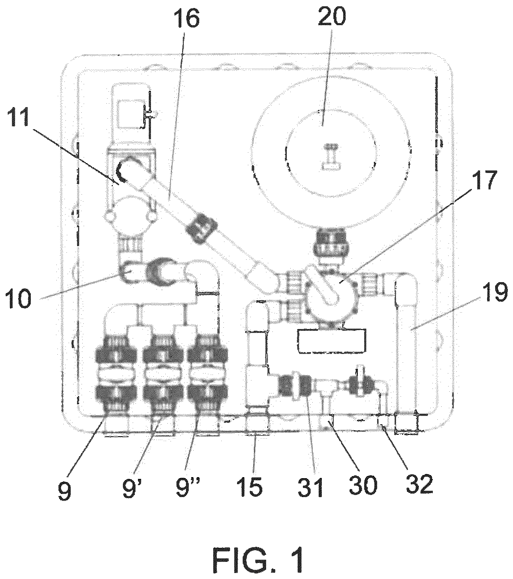

Figure 1 shows a schematic plan view of the assembly formed by the solenoid valves, pump, filter and electronic selector valve involved in the installation of the invention.
Figure 2 shows a schematic diagram of the complete installation of the invention applied to a swimming pool.
Figure 3 shows a view similar to Figure 2, but in which the server controls more than one swimming pool simultaneously.
Figure 4 shows a schematic representation of the automatic selector valve control.

### PREFERRED EMBODIMENT OF THE INVENTION

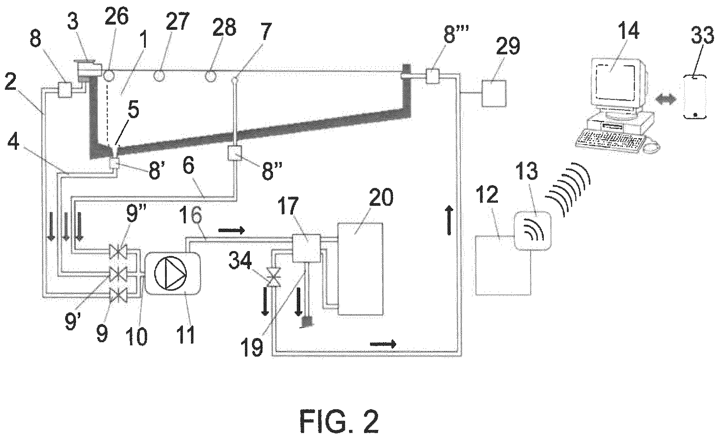

In view of the figures shown, and in particular figure 2, the manner in which the equipment for automatic, integrated management of swimming pools of the invention is intended to be implemented in a swimming pool (1) is shown, in which there are three circuits for suctioning swimming pool water and a circuit for returning clean water or filling of the same.

These circuits consist of a first circuit (2) for suctioning swimming pool water that collects the surface water and the debris that floats thereon through sumps (3) located on the upper area of the swimming pool.

The second circuit (4) is connected to the drain (5) of the swimming pool, while the third suction circuit (6) is connected to an intermediate height intake (7), for selective connection of the suction hose of a pool cleaner.

All these circuits are assisted by electronic pressure gauges (8-8'-8"), as well as respective solenoid valves (9-9'-9") which are connected in parallel through a common conduit (10) to a pump (11), both the electronic pressure gauges (8-8-8") and the solenoid valves (9-9'-9") being controlled by a switchboard (12) with a communication module (13) with an external server (14).

At the same time, the pool will have a water pumping or return circuit (15) also assisted by an electronic pressure gauge (8"') and a solenoid valve to control the outflow (34), which are also controlled by means of the switchboard (12).

The outlet conduit (16) of the pump (11) as well as the water pumping or return circuit (15) are connected to a motorised selector valve (17), also controlled by means of the switchboard (12), which includes a selector (18) with six positions according to the following functions:
- Filtering.
- Washing.
- Emptying.
- Closing.
- Recirculating.
- Rinsing.

This selector valve (17) is connected to the pump (11), to the water pumping or return circuit (15), to a drain (19), as well as to the inlet and outlet of a purification filter (20), preferably a sand filter, in order to clean it by reversing the flow that normally passes through the same.

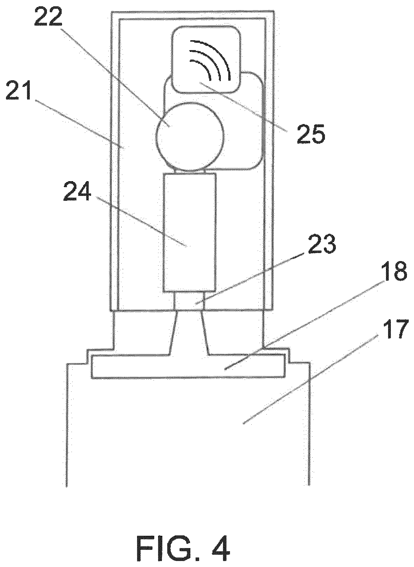

As shown in the detail of figure 4, the selector valve (17) includes a rotary selector (18) to communicate between them and, according to different operating modes, the different conduits that are connected to the valve, a selector which, being conventional, must be previously moved in axial direction to separate from its seat, before being able to rotate to the required position.

For this purpose, and in accordance with another feature of the invention, starting from the conventional structure of a selector valve, it has been provided that on the upper area thereof a casing (21) is established in which a motorised transmission (22) is established, in which one or more motors are involved, which acts axially on a stem (23) associated with the selector (18), sliding on a sheath or guide (24), in a similar manner to a Bowden cable, wherein the stem is connected to the selector through a Cardan joint or similar, transmission which likewise governs the controlled rotation of said stem, and consequently of the selector (18).

The motor or motors involved in the valve actuation head are preferably of the stepper type and are controlled by means of communication equipment (25), such as a telephone card, a router or other similar equipment, preferably wireless.

This device, like those previously mentioned, will be controlled through the switchboard (12).

Thus, it is a control structure of a selector valve in which the internal structure of the valve is not affected with respect to conventional valves, so that the actuation head can be easily installed on existing selector valves with minimal modifications, conferring a great versatility thereto.

As additional electronic control elements of the system, it has been provided that the filter (20) has an internal pressure sensor to control the saturation level of the filter, as well as the pool having monitoring means for monitoring the filling level (26), pH (27), turbidity or temperature (28) sensors, electronic dosing devices (29) for chemical products such as chlorine or algaecides, as well as the possible lighting system of the pool, decorative jets, automatic pool cleaners, etc.

Finally, the mains water intake (30) is connected to the water pumping or return circuit (15) by means of a filling solenoid valve (31), intake which can also be connected by means of a solenoid valve to the water supply circuit of the showers (32) of the swimming pool.

Thus, from this structure, the switchboard has a communication equipment, external or internal, for transmitting information and receiving it from an external server (14) so that by means of a computer application accessible through a tablet, mobile phone (33) or computer, the data obtained by the different sensors can be analysed and the installation optimally managed, or it can generate alarm signals so that the user can remotely select the optimal operating mode as well as manage certain types of faults.

As is evident, there is no point in remotely controlling the selector valve (17) if the status of each of the multiple solenoid valves, water flow through each circuit, pressures, etc. is not known; therefore, all these data that are monitored by means of the switchboard (12) are synchronised and automated through the software so that the control interface is as simple as possible, so that only the intended operating mode is selected therethrough, the system ensuring that each and every one of the solenoid valves match said selected operating mode.

At the same time, as mentioned above, the application can be used to remotely control the cleaning modes allowed by the pool, i.e., to select the water flow through one of the three suction circuits, by controlling the solenoid valves (9-9'-9") associated with each of these circuits to, for example, remove leaves or debris that are floating on the water through the first circuit (2), remove debris from the bottom through the second circuit (4), or connect a pool cleaner through the third circuit (6).

The wireless communications provided in the system may be of any conventional type, such as via Bluetooth or Wi-Fi.

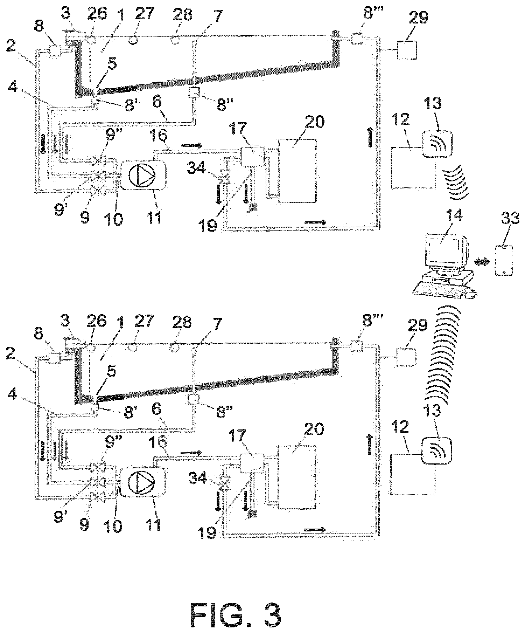

It only remains to point out that, as Figure 3 shows, the system management application will allow several installations to be controlled simultaneously, as long as they include the swimming pool of the invention, as defined in the appended claims.

## Claims

1. A swimming pool that includes an equipment for automatic, integrated management of swimming pools, (1) further comprising
three circuits for suctioning swimming pool water and a circuit (15) for returning clean water or filling of the same, the first circuit (2) for suctioning swimming pool water that collects surface water and debris that floats thereon through sumps (3) located on the upper area of the swimming pool, the second circuit (4) that is connected to a drain (5) of the swimming pool;
the third suction circuit (6) which is connected to an intermediate height intake (7) for the connection of a pool cleaner, these three circuits being connected to a pump (11) which in turn is connected to a filter (20) by means of a selector valve (17) which is in communication with the water pumping or return circuit (15) as well as with the drain (5),
**characterised in that** the equipment for automatic integrated swimming pool management further comprises a switchboard (12) with a communications module (13) and an external server (14), the three water suction circuits (2, 4, 6) are assisted by electronic pressure gauges (8-8'-8"), as well as respective solenoid valves (9-9'-9") which are connected in parallel through a common conduit (10) to the pump (11), both the electronic pressure gauges (8-8'-8") and the solenoid valves (9-9'-9") being controlled by the switchboard (12) with the communications module (13) with the external server (14);
the water pumping or return circuit (15) being provided to also be assisted by an electronic pressure gauge (8‴) and a solenoid valve for controlling the outlet flow (34), which are also controlled by means of the switchboard (12), while the selector valve (17) is motorised and controlled by the switchboard (12), which includes a selector (18) with six operating positions; filtering, washing, emptying, closing, recirculating and rinsing; the filter (20), preferably made of sand, also being provided to have an internal pressure sensor controlled by means of the switchboard (12), which is also associated with pH (27), turbidity, temperature (28) sensors, monitoring means for monitoring the filling level (26) and/or electronic dosing devices (29) for chemical products such as chlorine or algaecides, while a mains water intake (30) is connected to the water pumping or return circuit (15) by means of a filling solenoid valve (31) controlled by the switchboard (12), with the particularity that the external server (14) is capable of being accessed by means of a computer application through a tablet, mobile phone (33) or computer, with software for controlling and programming the different operating modes of the swimming pool, both from the point of view of the different operating modes of the selector valve (17) and of the control of the selective water flow through the three water suction circuits (2, 4, 6), as well as of the monitoring of the variables monitored by the different sensors involved in the installation.

2. The swimming pool according to claim 1, **characterised in that** it includes a system management application which is capable of controlling several installations simultaneously.

3. The swimming pool according to claim 1, **characterised in that** the selector valve (17) includes a casing (21) at the top of which a motorised transmission (22) is established, involving one or more motors, acting axially on a stem (23) associated with a selector knob (18) of the valve, sliding on a sheath or guide (24), wherein the stem (23) is connected to the selector through a Cardan joint, a transmission which likewise governs the controlled rotation of said stem, anc consequently of the selector knob (18) preferably through stepper-type motors, motor(s) controlled through a communication equipment (25), attached to the switchboard (12).

4. The swimming pool according to claim 1, **characterised in that** the switchboard (12) includes control means for controlling swimming pool lighting systems, operating decorative jets and/or automatic pool cleaners.

## Patentansprüche

1. Schwimmbad, das eine Einrichtung zur automatischen, integrierten Verwaltung von Schwimmbädern (1) einschließt, die ferner drei Kreise zum Ansaugen von Schwimmbadwasser und einen Kreis (15) zum Zurückführen von sauberem Wasser oder zu dessen Auffüllen umfasst, den ersten Kreis (2) zum Ansaugen von Schwimmbadwasser, der Oberflächenwasser und darauf schwimmende Ablagerungen über Auffangwannen (3) sammelt, die sich im oberen Bereich des Schwimmbads befinden, den zweiten Kreis (4), der mit einem Abfluss (5) des Schwimmbads verbunden ist;
den dritten Ansaugkreis (6) umfasst, der mit einem Zwischenhöheneinlass (7) für den Anschluss eines Schwimmbeckenreinigers verbunden ist, wobei diese drei Kreise mit einer Pumpe (11) verbunden sind, die ihrerseits mit einem Filter (20) über ein Umschaltventil (17) verbunden ist, das mit dem Wasserpump- oder Rücklaufkreis (15) sowie mit dem Abfluss (5) in Verbindung steht,
**dadurch gekennzeichnet, dass** die Einrichtung zur automatischen integrierten Schwimmbadverwaltung ferner einen Schaltschrank (12) mit einem Kommunikationsmodul (13) und einem externen Server (14) umfasst, die drei Wasseransaugkreise (2, 4, 6) durch elektronische Manometer (8-8'-8") sowie entsprechende Magnetventile (9-9-9") unterstützt werden, die parallel über eine gemeinsame Leitung (10) mit der Pumpe (11) verbunden sind, wobei sowohl die elektronischen Manometer (8-8'-8") als auch die Magnetventile (9-9'-9") durch den Schaltschrank (12) mit dem Kommunikationsmodul (13) mit dem externen Server (14) gesteuert werden;
wobei der Wasserpump- oder Rücklaufkreislauf (15) so bereitgestellt ist, dass er ebenfalls durch ein elektronisches Manometer (8‴) und ein Magnetventil zum Steuern des Auslassstroms (34) unterstützt wird, die ebenfalls durch den Schaltschrank (12) gesteuert werden, weiß, während das Umschaltventil (17) motorisiert ist und durch den Schaltschrank (12) gesteuert wird, der einen Wahlschalter (18) mit sechs Betriebsstellungen einschließt; Filtern, Waschen, Entleeren, Schließen, Umwälzen und Spülen; der Filter (20), der vorzugsweise aus Sand besteht, ebenfalls so bereitgestellt ist, dass er einen internen Drucksensor aufweist, der mittels des Schaltschranks (12) gesteuert wird, der auch mit Sensoren für pH (27), Trübung, Temperatur (28), Überwachungsmitteln zum Überwachen des Füllstands (26) und/oder elektronischen Dosiervorrichtungen (29) für chemische Produkte wie Chlor oder Algizide in Zusammenhang steht, während ein Leitungswassereinlass (30) mittels eines durch den Schaltschrank (12) gesteuerten Füllmagnetventils (31) mit dem Wasserpump- oder Rücklaufkreislauf (15) mit der Besonderheit verbunden ist, dass der externe Server (14) mittels einer Computeranwendung über ein Tablet, ein Mobiltelefon (33) oder einen Computer mit Software zum Steuern und Programmieren der unterschiedlichen Betriebsarten des Schwimmbads sowohl unter dem Gesichtspunkt der unterschiedlichen Betriebsarten des Umschaltventils (17) und der Steuerung des selektiven Wasserdurchflusses durch die drei Wasseransaugkreise (2, 4, 6), als auch des Überwachens der Variablen zugriffsfähig ist, die durch die unterschiedlichen in der Anlage eingesetzten Sensoren überwacht werden.

2. Schwimmbad nach Anspruch 1, **dadurch gekennzeichnet, dass** es eine Systemverwaltungsanwendung einschließt, die in der Lage ist, mehrere Anlagen gleichzeitig zu steuern.

3. Schwimmbad nach Anspruch 1, **dadurch gekennzeichnet, dass** das Wahlventil (17) ein Gehäuse (21), an dessen Oberseite ein motorisiertes Getriebe (22) eingerichtet ist, das einen oder mehrere Motoren umfasst, die axial auf eine Spindel (23) wirken, die mit einem Wahlknopf (18) des Ventils in Zusammenhang steht, der auf einer Hülse oder Führung (24) gleitet, wobei die Spindel (23) mit dem Wahlschalter über ein Kardangelenk verbunden ist, ein Getriebe einschließt, das ebenfalls die kontrollierte Drehung der Spindel und folglich des Wahlknopfes (18) steuert, vorzugsweise über Schrittmotoren, wobei der oder die Motoren über eine Kommunikationseinrichtung (25) gesteuert werden, die an dem Schaltschrank (12) angebracht ist.

4. Schwimmbad nach Anspruch 1, **dadurch gekennzeichnet, dass** der Schaltschrank (12) Steuerungsmittel zur Steuerung von Schwimmbadbeleuchtungssystemen, zum Betätigen von dekorativen Düsen und/oder automatischen Schwimmbadreinigern einschließt.

## Revendications

1. Piscine qui comporte un équipement pour la gestion automatique, intégrée des piscines, (1) comprenant en outre trois circuits pour l'aspiration d'eau de piscine et un circuit (15) pour le retour d'eau propre ou le remplissage de celle-ci, le premier circuit (2) pour l'aspiration d'eau de piscine qui recueille de l'eau de surface et des débris qui flottent sur celle-ci à travers des puisards (3) situés sur la zone supérieure de la piscine, le deuxième circuit (4) qui est raccordé à un drain (5) de la piscine ;
le troisième circuit d'aspiration (6) qui est raccordé à une prise de hauteur intermédiaire (7) pour le raccordement d'un nettoyeur de piscine, ces trois circuits étant raccordés à une pompe (11) qui est à son tour raccordée à un filtre (20) au moyen d'une vanne de sélecteur (17) qui est en communication avec le circuit de pompage ou de retour d'eau (15) ainsi qu'avec le drain (5),
**caractérisée en ce que** l'équipement pour la gestion automatique intégrée de piscine comprend en outre un tableau de distribution (12) avec un module de communication (13) et un serveur externe (14), les trois circuits d'aspiration d'eau (2, 4, 6) sont assistés par des manomètres électroniques (8-8'-8"), ainsi que des électrovannes (9-9-9") respectives qui sont raccordées en parallèle par l'intermédiaire d'un conduit commun (10) à la pompe (11), à la fois les manomètres électroniques (8-8'-8") et les électrovannes (9-9'-9") étant commandés par le tableau de distribution (12) avec le module de communication (13) avec le serveur externe (14) ;
le circuit de pompage ou de retour d'eau (15) étant fourni pour être également assisté par un manomètre électronique (8"') et une électrovanne pour commander l'écoulement de sortie (34), qui sont également commandés par le tableau de distribution (12), tandis que la vanne de sélecteur (17) est motorisée et commandée par le tableau de distribution (12), qui comporte un sélecteur (18) avec six positions de fonctionnement ; filtrage, lavage, vidange, fermeture, recirculation et rinçage ; le filtre (20), de préférence constitué de sable, étant également fourni pour avoir un capteur de pression interne commandé au moyen du tableau de distribution (12), qui est également associé avec des capteurs de pH (27), de turbidité, de température (28), des moyens de surveillance pour la surveillance du niveau de remplissage (26) et/ou des dispositifs électroniques de dosage (29) pour des produits chimiques tels que du chlore ou des algicides, tandis qu'une prise d'eau de réseau (30) est raccordée au circuit de pompage ou de retour d'eau (15) au moyen d'une électrovanne de remplissage (31) commandée par le tableau de distribution (12), avec la particularité que le serveur externe (14) est apte à être accessible au moyen d'une application d'ordinateur par une tablette, un téléphone portable (33) ou un ordinateur, avec un logiciel pour commander et programmer les différents modes de fonctionnement de la piscine, tant du point de vue des différents modes de fonctionnement de la vanne de sélecteur (17) que de la commande de l'écoulement d'eau sélectif à travers les trois circuits d'aspiration d'eau (2, 4, 6), ainsi que de la surveillance des variables surveillées par les différents capteurs impliqués dans l'installation.

2. Piscine selon la revendication 1, **caractérisée en ce qu'**elle comporte une application de gestion de système qui est apte à commander plusieurs installations simultanément.

3. Piscine selon la revendication 1, **caractérisée en ce que** la vanne de sélecteur (17) comporte un boîtier (21) au sommet duquel une transmission motorisée (22) est établie, impliquant un ou plusieurs moteurs, agissant axialement sur une tige (23) associée à un bouton de sélecteur (18) de la vanne, en glissant sur une gaine ou un guide (24), dans laquelle la tige (23) est raccordée au sélecteur par un joint de Cardan, une transmission qui régit également la rotation commandée de ladite tige, et par conséquent du bouton de sélecteur (18), de préférence par des moteurs de type pas à pas, un ou plusieurs moteurs commandés par un équipement de communication (25), fixé au tableau de distribution (12).

4. Piscine selon la revendication 1, **caractérisée en ce que** le tableau de distribution (12) comporte des moyens de commande pour commander des systèmes d'éclairage de piscine, faire fonctionner des jets décoratifs et/ou des nettoyeurs automatiques de piscine.
